# EUROPEAN PATENT SPECIFICATION

(11) **EP 0 467 256 B1**
(45) Date of publication and mention of the grant of the patent: **11.10.1995**
(21) Application number: 91111744.8
(22) Date of filing: 15.07.1991
(51) Int. Cl.: H04S 3/00, H04S 7/00

(54) **Surround sound effect control device**
Vorrichtung zur Steuerung von Raumklangeffekten
Dispositif de commande d'effet de son spatial

(30) Priority: 17.07.1990 JP 187293/90
(43) Date of publication of application: 22.01.1992
(73) Proprietor: MATSUSHITA ELECTRIC INDUSTRIAL CO., LTD., Kadoma-shi, Osaka-fu, 571 (JP)
(72) Inventor: Shimizu, Yoshikazu, Osaka-shi, Osaka-fu (JP); Nakagawa, Satomi, Osaka-shi, Osaka-fu (JP)
(74) Representative: Eisenführ, Speiser & Partner

(56) References cited:
- EP-A- 0 367 569
- US-A- 4 856 064
- PATENT ABSTRACTS OF JAPAN vol. 12, no. 085 (E-591)17 March 1988 & JP-A-62219900 (Matsushita) 28 September 1987

## Description

### 1. Field of the Invention

The present invention relates to a surround sound effect control device for selecting one of a plurality of surround sound effect circuits and, more particularly, to a surround sound effect control device for use in a television set.

### 2. Description of the Prior Art

Conventionally, a surround sound effect control device is provided in the audio device to allow the user to vary the reproduced sound effect according to his desire.

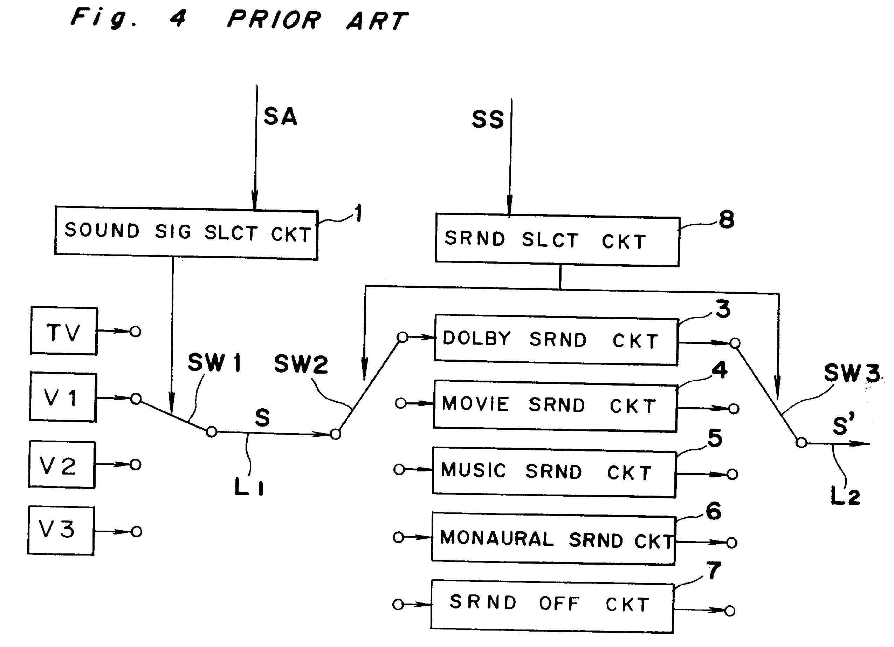

An example of a conventional surround effect control device is shown in Fig. 4. Reference numeral 1 is a sound signal source selection circuit for selecting a signal source from a plurality of signal sources TV, V1, V2, and V3 by a source switch SW1 in response to the sound signal selection signal SA. The selected signal S is transmitted through a line L1. The sound sources are, for example, a television set TV1, a first video cassette recorder V1, a second video cassette recorder V2, and a third video cassette recorder V3.

Reference numeral 8 is a surround effect pattern selection circuit for selecting one of a plurality of surround sound effect patterns by surround switches SW2 and SW3 switched to one of surround effect circuits 3, 4, 5, 6, and 7 in response to a surround effect selection signal SS. Surround effect circuits 3, 4, 5, 6, and 7 can modify the sound signal S from line L1 to various signal patterns of surround sound effect, such as "Dolby (Trade Mark) Surround", "Movie Surround", "Music Surround", "Monaural Surround", and "Surround-off". The modified sound signal S′ is output through a line L2.

Each of surround sound effect circuits 3, 4, 5, 6 and 7 is briefly described as follows.

The dolby surround circuit 3 reproduces a sound from a sound signal including a delay between left and right sound signals.

The movie surround circuit 4 reproduces a sound by the delay of a difference signal between left and right sound signals.

The music surround circuit 5 reproduces a sound in a manner similar to that of the movie surround circuit 4, but the amount of the delay is reduced.

The monaural surround circuit 6 generates the difference signal from the original sound signal and a delayed signal thereof.

In operation, when the sound selection signal SA is input to the sound source selection circuit 1, the selection switch SW1 turns to connect one of the sound signal sources TV, V1, V2, and V3 to line L1. For example, it is assumed that the switch SW1 is turned such that the sound source V1 is connected to line L1, as depicted in Fig. 4 by the input signal SA.

When the surround effect selection signal SS is input to a surround effect pattern selection circuit 8, the surround switches SW2 and SW3 are turned to connect line L1 to one of surround effect pattern circuits 3, 4, 5, 6, and 7 and further to line L2. For example, it is assumed that the switches SW2 and SW3 are turned such that lines L1 and L2 are connected through the movie surround circuit 4 by the surround effect selection signal SS.

In this case, the sound signal S from the first video cassette recorder V1 is input to the movie surround circuit 4 in which the original sound signal S is modified to signal S′. The modified signal S′, thus obtained, is further transmitted to a next stage through line L2.

However, according to the prior art surround sound effect control device, the selection of sound signal sources TV, V1, V2, and V3 and the selection of surround effect pattern circuits 3, 4, 5, 6, and 7 are performed individually, without any mutual relationship. Thus, it is necessary for the user to make two selections, one for the sound signal source and the other for surround sound effect pattern, every time when the viewing source is changed. For example, while watching a TV program which is usually served in a monaural sound, if a user switches to a video cassette recorder, associated with the sound signal source V1, it is necessary to further turn the switches SW2 and SW3 from the "Monaural Surround" to a position other than the "Monaural Surround" so that the stereo sound as usually served by the video cassette tape can be appreciated with its full performance.

Further there is known from EP-0 367 569 A2 a sound effect system comprising an audio signal processing apparatus. The audio signal processing apparatus is comprised of an audio system, video system and control system.

### SUMMARY OF THE INVENTION

The present invention has been developed with a view to substantially solving the above described disadvantages and has for its essential object to provide an improved surround sound effect control device.

In order to achieve the aformentioned objective, a surround sound effect control device comprises a plurality of sound signal sources each for producing a sound signal, a sound source selection signal generating means for generating a sound source selection signal indicative of one of the plurality of sound sources, and a plurality of sound signal modifying means for modifying the sound signal. The surround sound effect control device further comprises a memory means for storing data indentifying one of the plurality of sound signal modifying means correspondingly to each of the sound sources, a first switching means for selecting one of the plurality of sound sources in response to the sound source selection signal, and a second switching means for selecting one of the plurality of sound signal modifying means in response to data read from the memory means, the data being read out from the memory in response to the sound source selection signal.

### BRIEF DESCRIPTION OF THE DRAWINGS

These and other objects and features of the present invention will become clear from the following description taken in conjunction with the preferred embodiment thereof with reference to the accompanying drawings throughout which like parts are designated by like reference numerals, and in which:
Fig. 1 is a block diagram of a surround sound effect control device according to a preferred embodiment of the present invention;
Fig. 2 is a table showing a relationship between a sound signal source, and a surround sound effect pattern stored in a memory device provided in the surround sound effect control device of Fig. 1;
Fig. 3 is a flow chart showing an operation of the surround sound effect device of Fig. 1; and
Fig. 4 is a block diagram of a conventional surround sound effect control device.

### DETAILED DESCRIPTION OF THE PREFERRED EMBODIMENT

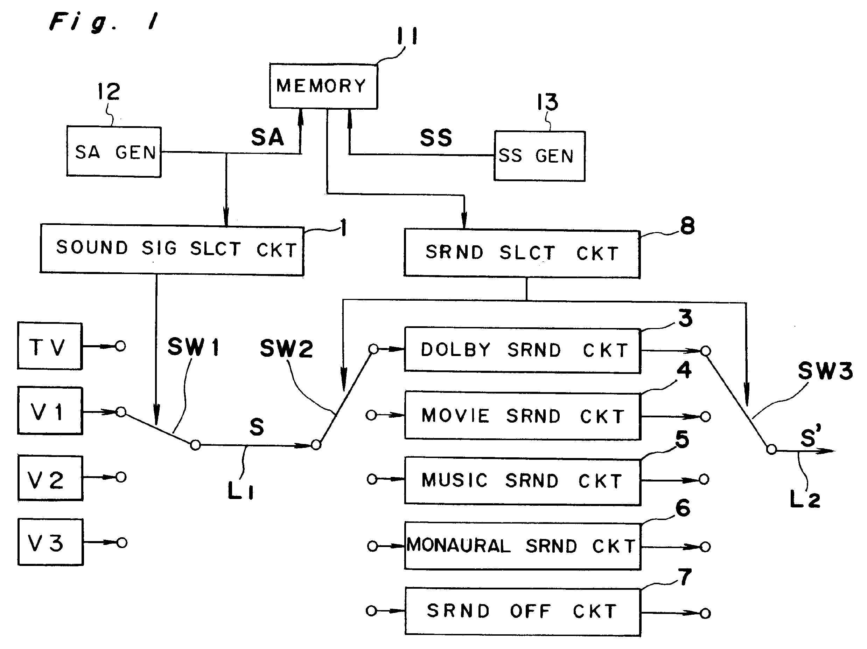

Referring to Fig. 1, a surround sound effect control device according to an embodiment of the present invention is shown.

In Fig. 1, reference numeral 1 is a sound signal source selection circuit for selecting a signal source from a plurality of signal sources TV, V1, V2, and V3 by a source switch SW1 in response to the sound signal selection signal SA. The selected signal S is transmitted through a line L1. The sound sources are, for example, a television set TV, a first video cassette recorder V1, a second video cassette recorder V2, and a third video cassette recorder V3.

Reference numeral 8 is a surround effect pattern selection circuit for selecting one of a plurality of surround sound effect patterns by surround switches SW2 and SW3 switched to one of surround effect circuits 3, 4, 5, 6, and 7. Surround effect circuits 3, 4, 5, 6, and 7 can modify the sound signal S from line L1 to various signal patterns of surround sound effect, such as "Dolby (Trade Mark) Surround", "Movie Surround", "Music Surround", "Monaural Surround", and "Surround-off". The modified sound signal S′ is output through a line L2.

The surround sound effect control device according to the embodiment of the present invention further comprises a memory 11 for storing a table carrying a number of different sound sources and corresponding pattern numbers identifying different surround sound effect.

Referring to Fig. 2, an example such a table stored in memory 11 is shown. In the table of Fig. 2, the sound signal sources are shown in the left column and the surround sound effect patterns with surround circuit numbers are shown in the right column. The sound signal sources and the surround sound effect patterns are stored in pairs to set desired combinations, and such combinations can be set by the user. For example, for the sound signal source TV, "MONAURAL SURROUND" is paired, and thus the surround circuit number "6" is assigned.

Referring back to Fig. 1, the memory 11 is coupled with a sound selection signal generator 12 and a surround selection signal generator 13. The sound selection signal generator 12 repeatedly or continuously generates the sound selection signal SA identifying the sound source which the user selects. For example, when the sound signal source TV is selected by a suitable selection key, such as provided in a remote controller (not shown), a sound selection signal SA representing the TV is produced not only at the time when the selection is made, but during the entire period while the sound signal source TV is selected.

The surround selection signal generator 13, on the other hand, generates one shot of a surround selection signal SS in response to each selection of surround sound effect pattern by a suitable selection key (not shown).

When the surround selection signal SS carrying an information of surround sound effect pattern which is newly selected by the user is input to the memory 11, the surround sound effect patterns for the current sound source stored in the memory 11 is rewritten by the newly selected surround sound effect pattern. When the data in the table is renewed, the surround switches SW2 and SW3 turn to connect the lines L1 and L2 to the newly selected surround circuit.

For example, it is assumed that the sound signal source V2 is currently selected, the sound selection signal generator 12 continuously generates the sound selection signal SA which identifies the second video recorder V2. The sound selection signal SA is input to the sound signal selection circuit 1 which thereupon turns and holds the sound switch S1 to connect the line 1.to the sound source V2. In the mean time, the sound selection signal SA is also input to the memory 11 for reading the data paired with the received sound selection signal SA, which is "Music Surround (2)" according to the table in Fig. 2.

Then, when the user newly selects one of surround effect patterns such as "Dolby Surround (3)" through a suitable key (not shown). The surround selection signal generator 13 generates a surround selection signal SS identifying "Dolby Surround (3)". The surround selection signal SS is applied to the memory 11 and is rewritten in the memory 11. Thus the data in memory 11 at the area corresponding to the presently selected signal source is rewritten, e.g. from "Music Surround (2)" to "Dolby Surround (3)" in the above example. Thus obtained data identifying "Dolby Surround (3)" is applied to the surround selection circuit 8, which then drives the surround switches SW2 and SW3 to connect the lines L1 and L2 to the dolby surround 3.

As described above, according to the present invention, a desired surround sound effect pattern for each sound source can be stored in the memory 11 through a simple operation.

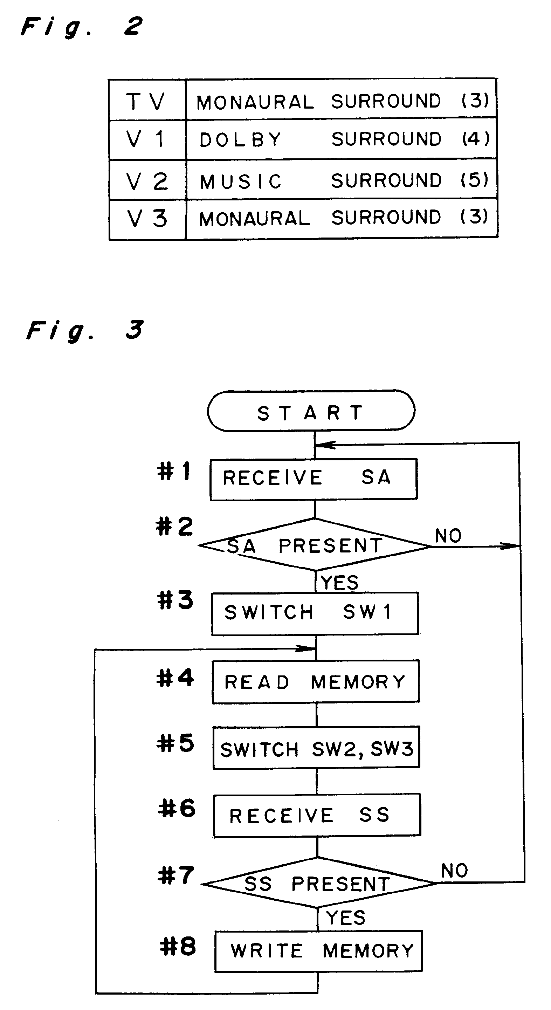

Referring to Fig. 3, a flow chart of operation executed in the surround sound effect control device according to the present invention is shown.

As shown at step #1, the system including memory 11 is set in a condition ready to receive from source selection signal generator 12 a sound signal selection signal SA which represents one of signal sources TV, V1, V2 and V3.

At step #2, the presence of the sound signal selection signal SA is detected. When the sound selection signal SA is not present, the operation returns to step #1. When the sound selection signal SA is present, the operation goes to step #3.

At step #3, in response to the detection of the sound signal selection signal SA, the sound signal selection circuit 1 is activated so that the source switch SW1 is turned to connect one of signal sources TV, V1, V2, and V3 to the line L1.

At step #4, the sound selection signal SA is input to the memory 11 to designate a particular area in the memory 11 at which the surround sound effect pattern, such as the surround circuit number, is stored, and in turn, the data in the designated area is read out.

At step #5, the surround switches SW2 and SW3 are turned by the surround selection circuit 8 to connect one of surround circuits 3, 4, 5, 6, and 7 to the lines L1 and L2 in response to the surround circuit number read out from the memory 11.

At step #6, the system is set in a condition ready to receive from the surround selection signal generate 13 the surround selection signal SS which represents one of surround sound effect pattern selected by the user.

At step #7, the presence of the surround selection signal SS is detected. When the surround selection signal SS is not present, the operation returns to step #1. When the sound selection signal SS is present, the operation goes to step #8.

At step #8, the surround selection signal SS is input to the memory 11 and is used for overwriting the surround sound effect pattern data at the area corresponding to the currently selected sound signal source.

Thereafter, the operation returns to step #4 and follows steps #5, #6, and #7, and further to step #1, provided that no more surround selection signal SS is present.

From the above, it is clear that surround sound effect pattern is automatically selected based on the data stored in the memory 11, every time when the user changes the sound signal source.

Thus, the surround sound effect control device according to the present invention can release the user from such a bothersome task to re-select a favorable surround effect pattern for each of the sound sources. Furthermore, when the user desires to change the surround effect set to the current sound source, the user can easily change the same to a new surround effect pattern.

## Claims

1. A surround sound effect control device, comprising:
a plurality of sound signal sources (TV, V1, V2, and V3) each for producing a sound signal (S);
a plurality of sound signal modifying means (3, 4, 5, 6, and 7) for modifying said sound signal (S);
a first switching means (1, SW1) for selecting one of said plurality of sound sources (TV, V1, V2, and V3) in response to said sound source selection signal (SA);
characterized in that the device further comprises:
a sound source selection signal generating means for generating a sound source selection signal indicated of one of said plurality of sound sources;
memory means (11) for storing data identifying one of said plurality of sound signal modifying means (3, 4, 5, 6 and 7) correspondingly to each of said sound sources (TV, V1, V2, and V3);
a second switching means (8, SW2, SW3) for selecting one of said plurality of sound signal modifying means (3, 4, 5, 6 and 7) in response to data read from said memory means, the data being read out from the memory (11) in response to the sound source selection signal (SA).

2. A surround sound effect control device as claimed in Claim 1, further comprising a modifying means selection signal generating means (13) for generating a modify selection signal (SS) identifying one of said plurality of sound signal modifying means, said modify selection signal (SS) being stored in said memory means (11) correspondingly to the currently selected sound source.

3. A surround sound effect control device as claimed in Claim 1, wherein said sound source selection signal generating means (12) continuously produces said sound source selection signal (SA).

## Patentansprüche

1. Surround-Sound-Effekt-Steuerungseinrichtung mit:
einer Mehrzahl von Tonsignalquellen (TV, V1, V2 und V3), von denen jede ein Tonsignal (S) erzeugt;
einer Mehrzahl von Tonsignalmodifizierungseinrichtungen (3, 4, 5, 6 und 7) zum Modifizieren des Tonsignales (S);
einer ersten Schalteinrichtung (1, SW1) zum Selektieren einer aus der Mehrzahl der Tonquellen (TV, V1, V2 und V3) als Reaktion auf das Tonquellenselektionssignal (SA);
dadurch gekennzeichnet, daß die Einrichtung weiterhin umfaßt:
eine Tonquellenselektionssignalerzeugungseinrichtung zum Erzeugen eines Tonquellenselektionssignales, das eine aus der Mehrzahl der Tonquellen anzeigt;
Speichereinrichtungen (11) zum Speichern von Daten, welche eine aus der Mehrzahl der Tonsignalmodifizierungseinrichtungen (3, 4, 5, 6 und 7) korrespondierend zu jeder der Tonquellen (TV, V1, V2 und V3) identifizieren; eine zweite Schalteinrichtung (8, SW2, SW3) zum Selektieren von einer aus der Mehrzahl der Tonsignalmodifizierungseinrichtungen (3, 4, 5, 6 und 7) als Reaktion auf Daten, welche aus der Speichereinrichtung ausgelesen werden, wobei die Daten aus dem Speicher (11) in Abhängigkeit von dem Tonquellenselektionssignal (SA) ausgelesen werden.

2. Surround-Sound-Effekt-Steuerungseinrichtung nach Anspruch 1,
welche weiterhin eine Modifizierungseinrichtungsselektionssignalerzeugungseinrichtung (13) zum Erzeugen eines Modifikationsselektionssignales (SS) umfaßt, welches eine aus der Mehrzahl der Tonsignalmodifizierungseinrichtungen identifiziert, wobei das Modifizierungsselektionssignal (SS) in der Speichereinrichtung (11) korrespondierend zu der gegenwärtig selektierten Tonquelle gespeichert ist.

3. Surround-Sound-Effekt-Steuerungseinrichtung nach Anspruch 1,
bei welcher die Tonquellenselektionssignalerzeugungseinrichtung (12) das Tonquellenselektionssignal (SA) kontinuierlich erzeugt.

## Revendications

1. Dispositif de commande d'effet sonore enveloppant, qui comprend :
une pluralité de sources de signal sonore (TV, V1, V2 et V3) respectivement conçues pour produire un signal sonore (S);
une pluralité de moyens de modification de signal sonore (3, 4, 5, 6 et 7) servant à modifier ledit signal sonore (S);
un premier moyen de commutation (1, SW1) servant à sélectionner l'une desdites sources sonores (TV, V1, V2 et V3) en réponse à un signal de sélection de source sonore (SA);
caractérisé en ce qu'il comprend en outre :
un moyen générateur de signal de sélection de source sonore servant à produire un signal de sélection de source sonore indicatif de l'une desdites sources sonores;
un moyen de mémorisation (11) servant à mémoriser des données identifiant l'un desdits moyens de modification de signal sonore (3, 4, 5, 6 et 7) en correspondance avec chacune desdites sources sonores (TV, V1, V2 et V3);
un deuxième moyen de commutation (8, SW2, SW3) servant à sélectionner l'un desdits moyens de modification de signal sonore (3, 4, 5, 6 et 7) en réponse à des données lues dans ledit moyen de mémorisation, les données étant lues dans la mémoire (11) en réponse au signal de sélection de source sonore (SA).

2. Dispositif de commande d'effet sonore enveloppant selon la revendication 1, comprenant en outre un moyen (13) générateur de signal de sélection de moyen de modification servant à produire un signal de sélection de modification (SS) qui identifie l'un desdits moyens de modification de signal sonore, ledit signal de sélection de modification (SS) étant mémorisé dans ledit moyen de mémorisation (11) en correspondance avec la source sonore en cours de sélection.

3. Dispositif de commande d'effet sonore enveloppant selon la revendication 1, où ledit moyen générateur de signal de sélection de source sonore (12) produit de façon continue ledit signal de sélection de source sonore (SA).
